# EUROPÄISCHE PATENTANMELDUNG

(11) **EP 0 643 124 A1**
(43) Veröffentlichungstag der Anmeldung: **15.03.1995**
(21) Anmeldenummer: 94113564.2
(22) Anmeldetag: 31.08.1994
(51) Int. Cl.: C10L 5/40, C02F 11/12

(54) **Verfahren zur Verwertung von Klärschlämmen**

(30) Priorität: 13.09.1993 DE 4330884
(71) Anmelder: BAYER AG, 51368 Leverkusen (DE); RHEINBRAUN AG, 50935 Köln (DE)
(72) Erfinder: Dummersdorf, Dr. Hans-Ulrich, D-51399 Burscheid (DE); Herbst, Dr. Günther, D-51519 Odenthal (DE); Erken, Dipl.-Ing. Manfred, D-50129 Bergheim (DE); Menge, Dipl.-Ing. Franz-Josef, D-50259 Pulheim (DE); Kreusing, Dr. Helmut, D-52078 Aachen (DE)

(57) **Zusammenfassung**

Bei dem Verfahren wird der aus einer vorhergehenden mechanischen Entwässerung stammende nasse Klärschlamm mit Braunkohle, Braunkohlekoks oder deren Mischungen untereinander in einem Gewichtsverhältnis von Klärschlamm zu Braunkohle oder der Mischungen mit Braunkohlekoks von 1:3 bis 3:1 gemischt und anschließend mit mäßigen Preßdrücken oberhalb von 50 bar naß zu formbeständigen Preßlingen verdichtet. Die brikettierten Preßlinge können dann in einem Kraftwerkskessel als Hilfsbrennstoff einer thermischen Verwertung zugeführt werden oder in einem Pyrolyse- oder Vergasungsprozeß zur Gewinnung von Heiz- oder Synthesegas stofflich verwertet werden.

## Beschreibung

Die Erfindung gebt aus von einem Verfahren zur Verwertung von kommunalen oder industriellen Klärschlämmen mit hohen Wassergehalten durch Brikettierung zur Vorbereitung einer thermischen oder stofflichen Weiterverarbeitung.

Klärschlämme aus kommunalen bzw. industriellen Kläranlagen fallen jährlich mit großen Tonnagen an und werden derzeit durch Deponierung, Einsatz in der Landwirtschaft und auch Verbrennung in speziellen Klarschlammverbrennungsanlagen entsorgt. Der Gesetzgeber verschärft die Anforderungen an diese Entsorgungswege ständig, so daß künftig z.B. nur noch Klärschlämme mit einem bestimmten maximalen Quecksilbergehalt in der Landwirtschaft entsorgt werden dürfen, insofern der Quecksilbergehalt des Bodens gewisse Grenzwerte nicht übersteigt. Des weiteren wird die Deponierung durch den TA Siedlungsabfall künftig sehr stark eingeschränkt und durch die Begrenzung des organischen Anteils des Deponieproduktes auf maximal 5 % praktisch unmöglich gemacht. Damit stehen, außer der partiell landwirtschaftlichen Verwertung von minder schwermetallbelasteten Schlämmen als Entsorgungswege nur noch die Verbrennung oder die stofflich-thermische Verwertung zur Verfügung.

Die Entwicklung der Monoverbrennungstechnik von Klärschlamm ist dabei am meisten fortgeschritten, hat aber den Nachteil, daß aufgrund der meist niedrigen Heizwerte des Klärschlammes in erheblichem Maße Edelbrennstoffe, wie Gas oder ÖI zugefeuert werden müssen, um die erforderliche Verbrennungstemperatur zu erreichen. Der Heizwert dieser zwangsläufig benötigten Brennstoffe wird dabei in der Regel innerhalb der Schlammverbrennungsanlagen nur auf niedrigem energetischen Niveau für die Erzeugung von niedrig gespanntem Dampf genutzt. Oft geht der eigentlichen Verbrennung eine Trocknungsstufe voraus, die zusätzlich Energie benötigt. Darüber hinaus sind Verbrennungsanlagen für Klärschlamm sehr investitionskostenintensiv. Eine aus energetischer und investitionskostenseitiger Sicht bessere Möglichkeit der thermischen Verwertung von Klärschlämmen besteht in der Co-Verbrennung in bestehenden Kraftwerksanlagen, vor allem in Schmelzkammerkesseln, wobei dabei der Energieinhalt des Klärschlammes auf einem hohen energetischen Niveau genutzt werden kann. Diese Form der Verwertung stellt jedoch hohe Anforderungen an die Aufbereitung des Klärschlammes, z.B. muß er entweder in brikettierter Form oder als getrocknetes Granulat vorliegen, wobei die Granulierung und die Brikettierung nach dem heutigen Stand der Technik stets ein investitions- und betriebskostenintensive vorgeschaltete Trocknungsstufe voraussetzen (DE 4 013 206; EP 0 543 133). Die Brikettierung von Klärschlammen dagegen wird nach dem Stand der Technik und der vorherrschenden Fachmeinung als nur bei getrockneten Schlämmen unterhalb eines bestimmten Wassergehaltes von ca. 20 % für machbar angesehen (DE 3 606 704). In der DE 3 243 827 wird ein Verfahren vorgeschlagen, Klärschlämme mit getrocknetem Herbstlaub oder dessen Extraktionsrückständen zu brikettieren. Dieses Verfahren ist für einen großtechnischen industriellen Prozeß aus logistischen Gründen und Anbindung der Rohstoffbereitstellung an eine bestimmte Jahreszeit unbrauchbar.

In der DE 3 010 259 wird ein Verfahren zur Herstellung von Briketts aus organischen Abfällen beschrieben.

Nachteile des Verfahrens bestehen darin, daß die Zugabe von CaO zur Brikettmasse erforderlich ist. Damit muß ein zusätzlicher Stoff bereitgestellt werden, der Heizwert der Briketts wird vermindert durch Belastung des Brennstoffes mit Inerten. Zusätzlich treten erhebliche Gefährdungen von Kesseln durch Ca-Ablagerungen und Korrosionen auf. Ein weiterer Nachteil des Verfahrens besteht in der Notwendigkeit, sehr hohe Drücke anwenden zu müssen, was einerseits hohe Maschineninvestitionen und andererseits hohe Betriebkosten hervorruft. Ein weiterer produktivitätsmindernder Nachteil des Verfahrens besteht in der langen Einwirkungszeit des Druckes auf das Material. Weitere Nachteile bestehen in der eingeschränkten Anwendbarkeit des Verfahrens für Abfalle sämtlicher Art, da diese sich beim Verpressen ganz unterschiedlich verhalten. So ist das Verpressungsverhalten von Kunststoffen beispielsweise nicht mit dem von Hausmüll zu vergleichen.

Es stellte sich daher die Aufgabe, ein Verfahren zur Aufbereitung des Klärschlammes zu einem Zusatzbrennstoff mit niedrigem Heizwert für die weitere stoffliche oder thermische Verwertung zu finden, welches mit geringen Investitionen in die nachgeschaltete, in der Regel bereits für andere Zwecke vorhandene Verwertungsanlage, z.B. ein Kraftwerk, auskommt, den Klärschlamm in eine "kraftwerksgerechte Form" bringt, eine sichere Formgebung des Klärschlammes unter allen Bedingungen ermöglicht, dabei ein aufwendige Trocknung des Klärschlammes vermeidet, sowie ein einfaches logistisches handling des Klärschlammes erlaubt, und welches ohne besondere Zuschlagstoffe und Anwendung hoher Drücke auskommt.

Die Aufgabe wird erfindungsgemäß dadurch gelöst, daß der nasse Klärschlamm aus der mechanischen Entwässerung der Kläranlage mit getrockneter Braunkohle mit einem Wassergehalt von 10 % bis 30 %, Braunkohlekoks oder deren Mischungen untereinander in einem Gewichtsverhältnis von Klärschlamm zu Braunkohle oder deren Mischungen mit Braunkohlekoks von 1:3 bis 3:1, vorzugsweise 1:2,5 bis 2,5:1, gemischt wird und anschließend mit mäßigen Preßdrücken zwischen 50 bar und 500 bar, vorzugsweise zwischen 100 bar und 150 bar, zu formbeständigen Preßlingen verdichtet wird. Unter einem "nassen Klärschlamm" wird verstanden, daß der Klärschlamm einen Wassergehalt von 30 % bis 80 % hat. Getrocknete Braunkohle mit einem Restwassergehalt von 10 % bis 30 % erhält man durch Trocknung von Rohbraunkohle, deren Wassergehalt in der Regel zwischen 45 % und 60 % liegt.

Vorteilhaft wird die Mischung während des Mischprozesses auf Temperaturen <100_{°}C aufgeheizt und vor der mechanischen Verdichtung wieder annähernd auf Raumtemperatur abgekühlt. Auf diese Weise kann eine Desodorierung erreicht werden. Dagegen findet bei den erwähnten relativ niedrigen Temperaturen praktisch noch keine Trocknung statt.

Zweckmäßige Ausführungen des erfindungsgemäßen Verfahrens bestehen darin, daß der mechanische Preßvorgang bei mäßigen Drücken in einer Flachmatrizenpresse (Kollergang), einer hydraulischen Presse oder einer Walzenpresse stattfindet.

Die so hergestellten Braunkohle-Klärschlammbriketts können dann direkt in einem Kraftwerk als Hilfsbrennstoff oder in einem Pyrolyse- oder Vergasungsprozeß anderweitig zur Gewinnung von Heiz-oder Synthesegas stofflich verwertet werden.

Es wurde überraschend gefunden, daß die nasse Verpressung von Klärschlamm, entgegen bestehenden Fachmeinungen, die ausschließlich die Verpressung von trockenem Klärschlamm unterhalb eines bestimmten Wassergehaltes von ca. 20 % für möglich halten, erfindungsgemäß mit Braunkohle bei den eingegebenen Mischungsverhältnissen ausgezeichnet möglich ist und der Klärschlamm nicht, wie eigentlich erwartet, das Bindemittel für die Brikettierung darstellt, sondern, daß die Braunkohle selbst das Bindemittel des Brikettierprozesses darstellt. Gegenversuche mit Steinkohle brachten keine positiven Ergebnisse.

Das erfindungsgemäße Verfahren gestattet, trotz nasser Verpressung des Klärschlammes die Produktion äußerlich trockener, ausreichend fester Preßlinge mit möglichst hohem Klärschlammgehalt bis 75 %, d.h. einem relativ niedrigen Heizwert.

Die vorgeschaltete thermische Behandlung bei Temperaturen unterhalb von 100 _{°} C der herzustellenden Kohle-Klärschlammischung im Mischprozeß stellt sicher, daß bei einem guten Wärmeübergang an die Mischung und einer maximalen Wärmeübergangsfläche eine sichere Abtötung von im Klärschlamm vorhandenen Mikroorganismen und Keimen erfolgt, die ansonsten unter anaeroben Bedingungen zu u. U. möglichen späteren Zersetzungen der organischen Substanz im Brikolett-Zustand des Klärschlammes unter Freigabe von Faulgasen führt.

Der Wassergehalt der Mischung bleibt bei dieser Aufheizung näherungsweise konstant, d.h. es findet keine Trocknung statt.

Die erfindungsgemäße nasse Verpressung des Klärschlammes mit Braunkohle/Braunkohlekoks und deren Mischungen ist bei verhältnismäßig niedrigen Drücken und gleichzeitiger ausreichender Festigkeit der Brikolettes möglich. Im Mischprozeß der Braunkohle mit dem nassen Klärschlamm kommt es offenbar zu einer weitgehenden Adsorption des Wassers aus dem Klärschlamm durch die Braunkohle. Der Klärschlamm kann in das Verfahren in dem Zustand, wie er gewöhnlich aus den mechanischen Entwässerungsstufen der Kläranlagen kommt, d.h. mit hohen Wassergehalten bis zu 80 % unmittelbar ohne aufwendige und teure Trocknung eingesetzt werden.

Ein weiterer Vorteil des Verfahrens ist der mögliche niedrige Gehalt der Kohle-Klärschlammischung bzw. der produzierten Brikolettes an Braunkohle bis zu minimal 25 %, der Vorteile bei Lagerung, Transport und Logistik des heizwertarmen Brikolettes bietet. Auf diese Weise können die Investitions- und Betriebskosten für die Klärschlammaufbereitungsanlage relativ niedrig gehalten werden.

Ein erheblicher Vorteil des erfindungsgemäßen Verfahrens der nassen Klärschlammverwertung besteht in der Ausschaltung der Explosions- und Selbstentzündungsgefahren, wie sie bei der Verarbeitung getrockneter Klärschlämme nach dem Stand der Technik vorliegen.

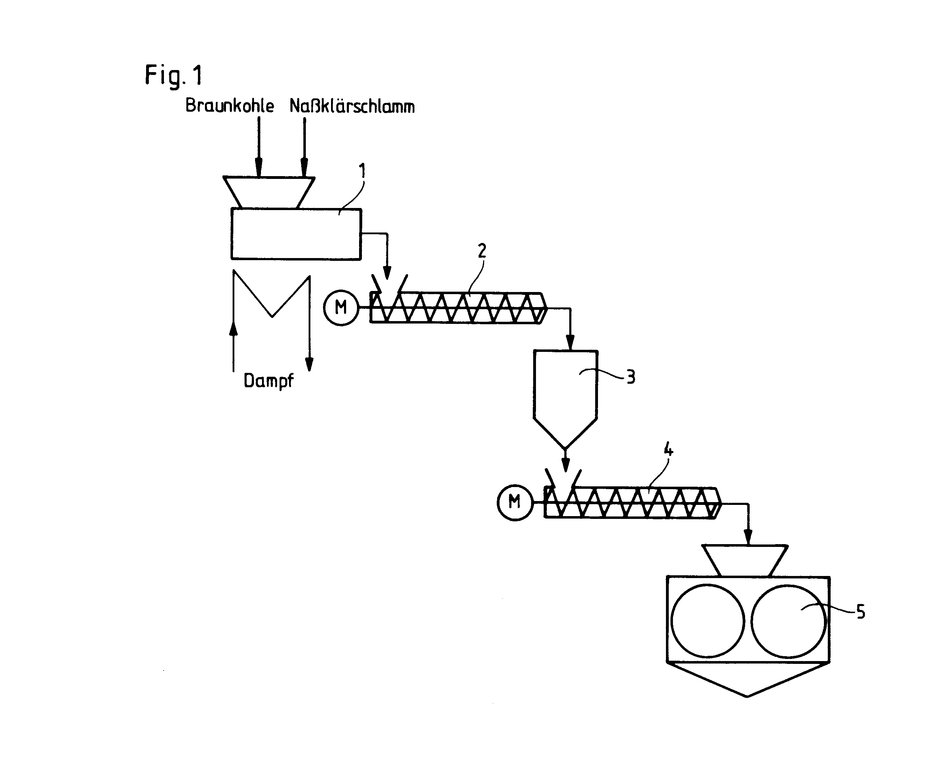

Fig. 1 zeigt ein Ausführungsbeispiel für die Durchführung des erfindungsgemäßen Verfahrens. Braunkohle mit einem Wassergehalt von 15 % und einer mittleren Korngröße <1 mm wird zusammen mit einem Naßklärschlamm mit einem Wassergehalt von 65 %, der als Filterkuchen einer Kammerfilterpresse vorliegt, im Verhältnis 40:60 zugunsten des Klärschlammes in eine beheizte Mischvorrichtung 1 gegeben und unter Wärmebeaufschlagung der Mischvorrichtung bei einer Produkttemperatur von ca. 80 °C gemischt. Anschließend wird die homogene Mischung über eine Transportschnecke 2 in einen Zwischenbunker 3 gegeben, wo eine Zwischenlagerung und Abkühlung der Klärschlammmischung erfolgt. Die nunmehr in einem rieselfähigen Zustand befindliche Klärschlamm/Braunkohlemischung wird nachfolgend wiederum über eine Transport- oder Stopfschnecke 4 auf eine Walzenpresse 5 aufgegeben und bei mäßigen Preßdrücken von 100 bar zu festen Preßlingen verarbeitet. Diese Preßlinge haben trotz hohem Wassergehalt ein äußerlich trockenes Aussehen und eine hinreichende Festigkeit, um Transport- und Umschlagvorgänge unbeschadet zu überstehen.

Die im Prozeß hergestellten Preßlinge können nunmehr als niedrigkalorischer Hilfsbrennstoff als Zuschlag zum Hauptbrennstoff Kohle in die Bunker oder auf die Transportbänder eines üblichen kohlegefeuerten Wärmekraftwerkes aufgegeben und in bestimmten Anteilen der Kesselwärmeleistung verfeuert werden. Dabei ist es unerheblich, ob das Kraftwerk mit Braunkohle oder Steinkohle befeuert wird, jedoch muß eine Rauchgasreinigung dergestalt vorhanden sein, daß spezielle Klärschlammschadstoffe, wie Schwermetalle oder CI aus dem Rauchgas entfernt werden können.

Der Einsatz in einem steinkohlegefeuerten Kraftwerk, z.B. einem Schmelzkammerkessel, erbringt zusätzlich den Vorteil, daß durch die enthaltene Braunkohle in den Klärschlammpreßlingen das Ascheschmelzverhalten im Kessel positiv beeinflußt wird.

Eine weitere Möglichkeit der Weiterverarbeitung besteht im Einsatz der Klärschlamm-Braunkohle-Brikolettes in Pyrolyse- und Vergasungsprozessen. Derartige Prozesse werden großtechnisch zur Erzeugung von Heiz- und Synthesegasen eingesetzt.

## Patentansprüche

1. Verfahren zur Verwertung von kommunalen oder industriellen Klärschlämmen mit hohen Wassergehalten durch Brikettierung, dadurch gekennzeichnet, daß der nasse Klärschlamm aus einer vorhergehenden mechanischen Entwässerung mit getrockneter Braunkohle, deren Restwassergehalt 10 % bis 30 % beträgt, Braunkohlekoks oder deren Mischungen untereinander in einem Gewichtsverhältnis von Klärschlamm zu Braunkohle oder der Mischungen mit Braunkohlekoks von 1:3 bis 3:1, vorzugsweise von 1:2,5 bis 2,5:1 gemischt wird und anschließend mit mäßigen Preßdrücken oberhalb von 50 bar, vorzugsweise zwischen 100 bar und 150 bar, naß zu formbeständigen Preßlingen verdichtet wird.

2. Verfahren nach Anspruch 1, dadurch gekennzeichnet, daß die Braunkohle/Klärschlammischung während des Mischprozesses auf Temperaturen unter 100 _{°} C aufgeheizt und vor der mechanischen Verdichtung wieder abgekühlt wird.

3. Verfahren nach Ansprüchen 1 und 2, dadurch gekennzeichnet, daß die Naßverdichtung der Mischung in einer Flachmatrizenpresse (Kollergang) stattfindet.

4. Verfahren nach Ansprüchen 1 und 2, dadurch gekennzeichnet, daß die Naßverdichtung der Mischung in einer hydraulischen Presse erfolgt.

5. Verfahren nach Ansprüchen 1 und 2, dadurch gekennzeichnet, daß die Naßverdichtung in einer Walzenpresse erfolgt.

6. Verfahren nach Ansprüchen 1 bis 5, dadurch gekennzeichnet, daß die brikettierten Preßlinge in einem Kraftwerkskessel als Hilfsbrennstoff thermisch verwertet werden.

7. Verfahren nach Ansprüchen 1 bis 5, dadurch gekennzeichnet, daß die brikettierten Preßlinge in einem Pyrolyse- oder Vergasungsprozeß zur Gewinnung von Heiz- oder Synthesegas stofflich verwertet werden.
